# EUROPEAN PATENT SPECIFICATION

(11) **EP 0 446 859 B1**
(45) Date of publication and mention of the grant of the patent: **27.09.1995**
(21) Application number: 91103739.8
(22) Date of filing: 12.03.1991
(51) Int. Cl.: G01N 21/27, G01N 33/53

(54) **Chemical luminescence-detecting apparatus**
Apparat zur Detektion der chemischen Lumineszenz
Appareil pour détecter la luminescence chimique

(30) Priority: 13.03.1990 JP 62190/90
(43) Date of publication of application: 18.09.1991
(73) Proprietor: Sankyo Company Limited, Tokyo (JP); HORIBA, LTD., Minami-ku Kyoto (JP)
(72) Inventor: Saito, Yukio, Yokohama-shi, Kanagawa-ken (JP); Sekiya, Koichi, Ciba-shi, Ciba-ken (JP); Sato, Yoshihiro, Yokohama-shi, Kanagawa-ken (JP); Kohno, Takeshi, Hirakata-shi, Osaka (JP); Takahasi, Hiroaki, 11-202, Ogurusu Kita Danti, Fusimi-ku, Kyoto (JP); Terada, Kunio, Ohtsu-shi, Shiga-ken (JP); Aoki, Takayuki, Kurita-gun, Shiga-ken (JP)
(74) Representative: TER MEER STEINMEISTER & PARTNER GbR

(56) References cited:
- EP-A- 0 083 761
- DD-A- 242 872
- DE-A- 1 911 576
- US-A- 3 435 237
- US-A- 4 401 387
- REVIEW OF SCIENTIFIC INSTRUMENTS. vol. 49, no. 8, August 1978, NEW YORK US pages 1134 - 1136; M. MICHAUD ET AL.: "Optical absorption using a system response corrector"
- PATENT ABSTRACTS OF JAPAN vol. 8, no. 254 (P-315)(1691) 21 November 1984,& JP-A-59 125043

## Description

### BACKGROUND OF THE INVENTION

### Field of the Invention

The present invention relates to a chemical luminescence-detecting apparatus as claimed in the preamble of claim 1.

### Description of the Prior Art

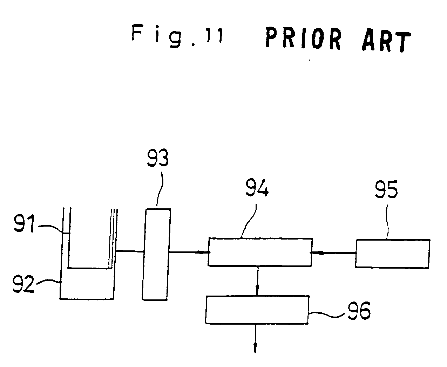

In order to detect an intensity of chemical luminescence of a solution, a cylindrical photometric cell 91 made of glass or plastics has been fixedly mounted on an integrated spherical cell holder 92 and a photomultiplier tube 94 as an optical detector has been provided through a shutter 93 so as to face to said photometric cell 91 in order to detect a quantity of chemical luminescence generated within the photometric cell 91 by the so-called batch-type measuring method, as shown in Fig. 11. In addition, referring to Fig. 11, reference numeral 95 designates a high-voltage power source and reference numeral 96 designates an amplifier.

However, according to the conventional chemical luminescence-detecting apparatus as shown in the above described Fig. 11, merely one photomultiplier tube 94 is provided for the photometric cell 91, so that a range, within which said quantity of chemical luminescence can be measured, is limited in the case where the measurement is carried out under the same one condition and thus it has been necessary to carry out the measurement with regulating the measuring conditions, for example a supply voltage from said high-voltage power source 95, a value of feedback resistance in said amplifier 96 and the like, of the photomultiplier tube 94 by various kinds of devices.

Further, the enzyme immuno assay has been recently carried out on the basis of the chemical luminescence method in the enzyme immuno measurement but it was problematically to use the above described conventional chemical luminescence-detecting apparatus as it is. A large number of items has to be randomly measured in the enzyme immuno measurement, so that a range of quantity of light to be measured is remarkably wide and thus the measurement can not be carried out by means of a single optical detector.

In addition, the above described problem occurs not only in the so-called batch-type measuring method but also in the so-called flow through-type measuring method using a spiral flow through-type photometric cell.

JP-A-59 125043 discloses a spectro photofluorometer having an exiting spectrometer, a sample cell, and a single photo detector for detecting light generated by fluorescence in the sample cell. The output of the photo detector is supplied to a CPU which is connected with a memory and a display means. This spectro photofluorometer can be switched from a high sensitivity mode to a low sensitivity mode and vice versa.

A sensitivity ratio a=Ih/Il which is stored in the memory has been calculated from the outputs of the photo detector operated in a high sensitivity mode and in a low sensitivity mode

US-A-44 01 387 discloses a nephelometer which comprises a light source, a sample cell and a first and a second photo detector. For measuring intensities of light scattered in two different directions from the same sample two individual photo detectors are used which are arranged at different angles with respect to the incident light.

DD-A-242 872 describes a method for measuring the activity of radioactive materials. In this method activity measurements having different efficiencies are performed simultaneously or sequentially. One of the measurements is performed for detecting only high energetic particles whereas the other measurement detects both high and low energetic particles. A correction value is determined by calculating the relation of the measured values.

### SUMMARY OF THE INVENTION

Paying attention to the above described matters, it is an Object of the present invention to provide a chemical luminescence detecting apparatus capable of surely detecting a wide range of quantities of luminescence.

In order to achieve the above described object a chemical luminescence detecting apparatus of the initially named kind is provided with the characterizing features of claim 1.

The chemical luminescence detecting apparatus according to the present invention is provided with at least two optical detectors of different sensitivity in the manner as described in claim 1 so that a measuring range of sensitivity of the whole apparatus is the total sum of ranges of sensitivities of the respective optical detectors and thus a wider range of measurement in comparison with the case where merely a single optical detector is used can be obtained. Due to the inventive construction of the detecting apparatus a highly accurate measurement can be achieved widely ranging from a low sensitivity zone to a high sensitivity zone.

### BRIEF DESCRIPTION OF THE DRAWINGS

Preferred embodiments of the present invention and a conventional apparatus are shown in the Figures, in which
- Fig. 1: is a sectional view showing an example of a chemical luminescence-detecting apparatus according to a first preferred embodiment;
- Fig. 2: is a block diagram roughly showing a construction of circuit of said apparatus shown in Fig. 1;
- Fig. 3: is a perspective view showing the inside of an enzyme immuno assay system with the chemical luminescence-detecting apparatus incorporated therein;
- Fig. 4: is a partially opened main block side view of said system;
- Fig. 5: is a plan view showing main components of said system;
- Fig. 6: is a sectional view showing a chemical luminescence-detecting apparatus according to a second preferred embodiment of the present invention;
- Fig. 7: is a sectional view showing a chemical luminescence-detecting apparatus according to a third preferred embodiment of the present invention;
- Fig. 8: is a perspective view showing main components of said apparatus shown in Fig. 7;
- Fig. 9: is a schematic diagram showing a relation among an output from a high sensitivity photomultiplier tube, an output from a low sensitivity photomultiplier tube and a concentration of luminous substance;
- Fig. 10: is a diagram showing results measured by means of the chemical luminescence-detecting apparatus according to the present invention; and
- Fig. 11: is a block diagram showing a conventional chemical luminescence-detecting apparatus.

### DESCRIPTION OF THE PREFERRED EMBODIMENTS

The preferred embodiments of the present invention will be described below with reference to the drawings.

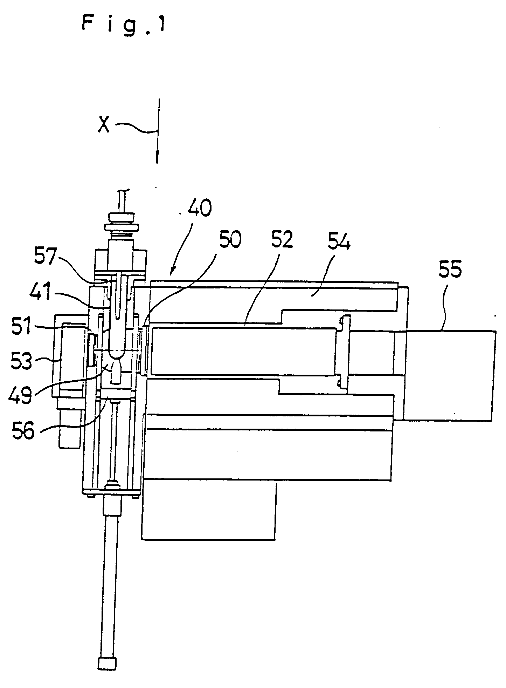

Figs. 1 to 5 show one preferred embodiment of the present invention.

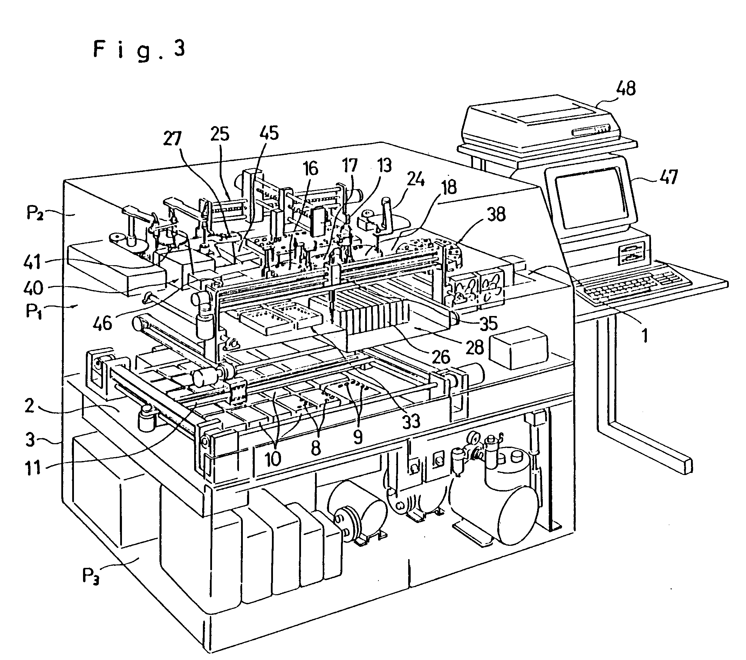

At first, before the chemical luminescence-detecting apparatus according to the present invention is described, the construction of the enzyme immuno assay system with the chemical luminescence-detecting apparatus incorporated therein is described with reference to Figs. 3 to 5.

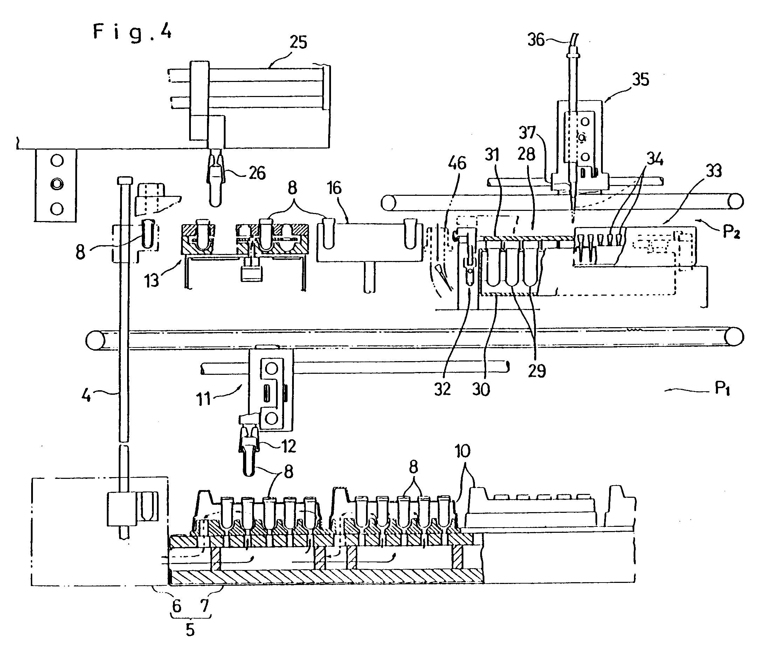

Referring to Fig. 3, reference numerals 1, 2 designate partition plates dividing an inner space of an apparatus case 3 into three spaces P₁, P₂, P₃, whereas P₂ is an upper space, P₁ a central space and P₃ a lower space. As shown in Fig. 4, a tube conveying elevator 4 is provided ranging from the central space P₁ to the upper space P₂. Further, reference numeral 5 in Fig. 4 designates an antibody immobilized tube cooling device comprising a suction-exhaust portion 6 communicatedly connected with a cooler (not shown) provided in the lower space P₃ and a cooling case 7 communicatedly connected with said suction-exhaust portion 6. Said cooling case 7 can be freely drawn out through the front side of said apparatus case 3.

Referring again to Fig. 3, reference numeral 8 designates an antibody immobilized tube with an antibody immobilized on an inner surface of a bottom thereof, an upper opening thereof being sealed with an aluminum foil, whereas reference numeral 9 designates a dilution tube. Said tubes 8, 9 are supported by a tube-supporting case 10 having its lower side opened, said case 10 being detachably placed on an upper surface portion of said cooling case 7 so as to form a cooling duct.

Reference numeral 11 designates a tube-conveying mechanism to be moved horizontally in two-dimensional directions, which is provided with a freely elevatable vessel chuck 12 (refer to Fig. 4) for conveying the antibody immobilized tube 8 (the dilution tube 9, if necessary) to a conveyance-beginning end of said elevator 4.

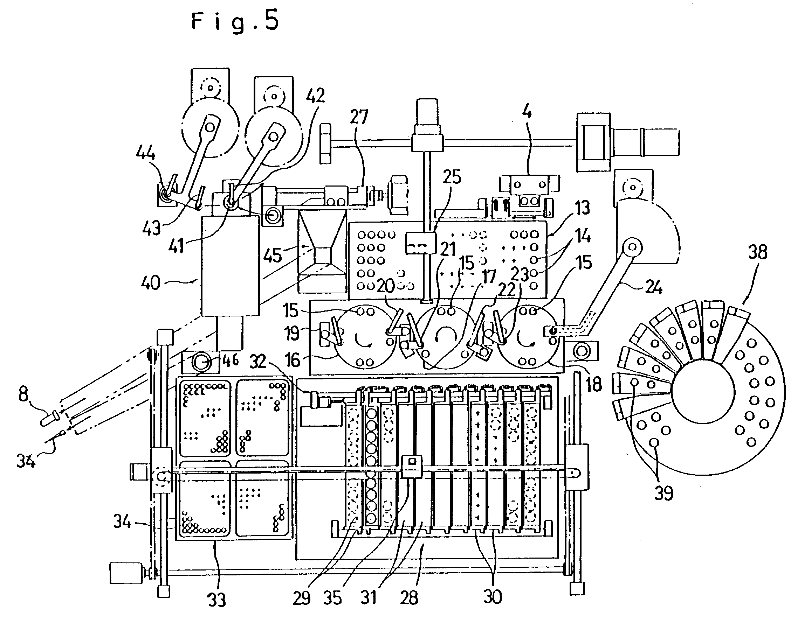

As shown in Fig. 5, reference numeral 13 designates a constant temperature shaker provided with a plurality of tube holding portions 14 and first to third rotors 16 to 18, each having a plurality of holding holes 15 for receiving an antibody immobilized tube 8. Said rotors 16, 17, 18 are arranged on the front side of said constant temperature shaker 13. A washer 19 and a diluent dispenser 20 are arranged around said first rotor 16, a washer 21 and a substrate solution dispenser 22 around said second rotor 17, and a washer 23 and an enzyme conjugated antibody reagent dispenser 24 around said third rotor 18 so that they may be rotated by an appointed angle in the direction shown by, for example, an arrow in the drawing.

Reference numeral 25 designates a tube-conveying mechanism provided with a tube chuck 26 (refer to Fig. 4) freely movable in three-dimensional directions for conveying the antibody immobilized tube 8 conveyed by means of the elevator 4 in an area ranging from the constant temperature shaker 13 to a sample portion 27 through the first to third rotors 16 to 18.

Reference numeral 28 designates a sample tube-housing portion in which sample tube-housing cases 30, each housing a plurality of sample tubes 29 with a sample (for example serum) poured therein in a row, stand in a line in the right and left direction (refer to Figs. 4, 5). And, referring to Figs. 4 and 5, reference numeral 31 designates a cover member for individually closing upper openings of said sample tube-housing cases 30. A cover member-closing mechanism 32 is provided on one end side in the direction, in which said tubes 29 stand in a row.

Reference numeral 33 designates a stock portion of a pipette tip 34. Reference numeral 35 designates a sample dispenser mechanism to be moved horizontally in two-dimensional directions. Said sample dispenser mechanism 35 is provided with a freely elevatable probe 37 communicatedly connected with a suction-exhaust pipe 36 at an upper portion thereof and said pipette tip 34 at a lower end thereof. By a descending movement of said probe 37 within said stock portion 33 a sample may be sucked into the pipette tip 34 from the sample tube 29 by a sucking action and said sample may be discharged in the antibody immobilized tube 8 held in the first rotor 16 by an exhausting action (refer to Fig. 4).

Reference numeral 38 designates a stock portion of reagent bottles 39 with said enzyme conjugated antibody reagent poured (refer to Fig. 5).

Referring to Fig. 3 and Fig. 5, reference numeral 40 designates a photometric portion provided with a photometric cell 41 formed of a glass tube, reference numeral 42 designates a reactant dispenser for pouring a reactant contained in the antibody immobilized tube 8 conveyed to said sample portion 27 into said photometric cell 41, reference numeral 43 designates a reagent dispenser for pouring a luminescent reagent (for example luminol solution) into the photometric cell 41, and reference numeral 44 designates a washer for the photometric cell 41. Reference numeral 45 designates a recovery portion for the antibody immobilized tube 8 and reference numeral 46 designates a discharging portion for the pipette tip 34.

With the enzyme immuno assay system having the above described construction, the enzyme immuno assay by, for example, the two-step sandwich method is carried out as follows:

The antibody immobilized tube 8 with the antibody corresponding to the item to be measured immobilized thereon is taken into said tube-holding hole 15 of the first rotor 16 by means of said tube-conveying mechanism 11 on the lower side, the elevator 4 and said tube-conveying mechanism 25 on the upper side. The aluminum foil sealing the upper opening of the antibody immobilized tube 8 is broken in the midway of said process of taking out the tube 8.

On the other hand, the probe 37 is provided with the pipette tip 34 at a lower end thereof so that the sample may be sucked into the pipette tip 34 from the sample tube 29 and then poured into the antibody immobilized tube 8 positioned in the first rotor 16. After that, the pipette tip 34 is discharged via said discharging portion 46.

Upon rotating the first rotor 16 by said appointed angle, a diluent is poured into the antibody immobilized tube 8, into which the sample has been poured, and then the antibody immobilized tube 8 is set into the constant temperature shaker 13 followed by shaking for an appointed time at a constant temperature of about the body heat to carry out a first immuno reaction.

The antibody immobilized tube 8 is taken out into the second rotor 17 to be washed and then subjected to a so-called B/F separation followed by pouring an appointed dose of enzyme conjugated antibody reagent corresponding to said item to be measured and setting into the constant temperature shaker 13 again to carry out a second immuno reaction.

Subsequently, the antibody immobilized tube 8 is taken out into the rotor 18 to be washed and then an appointed quantity of substrate solution is poured into the antibody immobilized tube 8 followed by setting into the constant temperature shaker 13 again to carry out an enzyme reaction for an appointed time. Hydrogen peroxide is generated in the antibody immobilized tube 8 in a quantity corresponding to a quantity of substance to be measured by this reaction.

After the enzyme reaction, the antibody immobilized tube 8 is conveyed to the sample portion 27 where the reaction solution containing hydrogen peroxide is added in the photometric cell 41, into which said luminescent reagent has been previously poured, to carry out a luminescent reaction. On the other hand, the antibody immobilized tube 8 is thrown into the discharging portion 45.

A luminescent quantity during the above described luminescent reaction is electrically measured and operated by means of a computer to display an analytical result (concentration of luminescent substance) on a monitor 37. Said result is recorded by means of a printer 48.

In said photometric portion 40 of the above described enzyme immuno assay system as shown in Fig. 1, the photometric cell 41 is held by a cell holder 49 having an integrated spherical shape. A high sensitivity photomultiplier tube (hereinafter referred to as HPMT) 52 and a low sensitivity photomultiplier tube (hereinafter referred to as LPMT) 53 are disposed through interference filters 50, 51, respectively, on both sides in the right and left direction of the photometric cell 41 so that they may stand on one straight line as observed in the direction of an arrow X. Reference numeral 54 designates a housing for said HPMT 52 and said housing 54 is provided with a cooler (not shown) for reducing the dark current of the HPMT 52. In addition, reference numeral 55 designates an amplifier of the HPMT 52, reference numeral 56 designates a shutter, and reference numeral 57 designates a reactant-pouring nozzle.

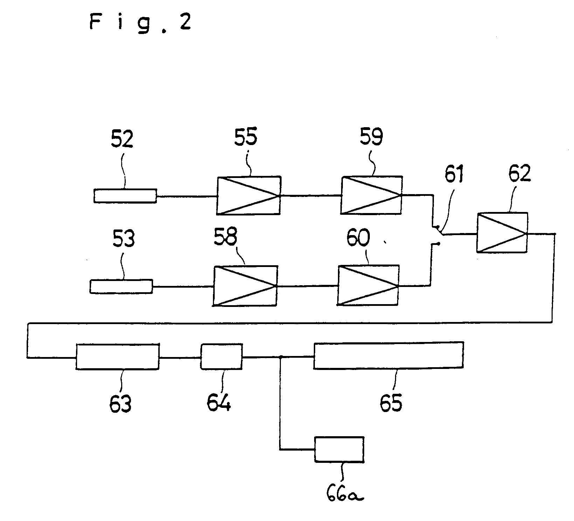

In case where the PMTs 52, 53 different in sensitivity are used to detect the chemical luminescent quantity, as described above, a signal from the PMT 52, however, is greatly different from that of the PMT 53 in level, so that a concentration signal must be obtained by converting said signals into a signal quantity, separately. In order to achieve this, the apparatus according to the present invention has a construction as shown in Fig. 2.

That is to say, Fig. 2 shows a connecting relation of the HPMT 52 with the LPMT 53. Referring to Fig. 2, reference numerals 55, 58 designate amplifiers, reference numerals 59, 60 designate log amplifiers, reference numeral 61 designates a changeover switch, reference numeral 62 designates an A/D converter, reference numeral 63 designates an inverse log converter, reference numeral 64 designates an integrator, reference numeral 65 designates a display and reference numeral 66a designates a memory.

In addition, said log amplifiers 59, 60 and said inverse log converter 63 are not always required depending upon a measuring range and said A/D converter 62. Furthermore, the position of the changeover switch 61 is not limited to the position shown. That is to say, the changeover switch 61 may also be disposed at the output sides of two A/D converters (for use in the HPMT and the LPMT) or at the output sides of two integrators. In Fig. 2 the changeover switch 61 is connected to the input portion of said A/D converter 62.

The changeover switch 61 is an analog switch for alternately putting the output signal from the HPMT 52 and the output signal from the LPMT 53 in the A/D converter 62 every 50 msec to put the data in two.

In this preferred embodiment, the radiant life is usually about 10 seconds, and, as described above, the output from the detector is alternately taken out one by one every 50 msec, so that, after all, the output from the respective detectors is divided into 200 pieces to be put into the computer. (The integral value of the respective outputs becomes the datum adopted in the operation of concentration). The signal from the HPMT 52 and the signal from the LPMT 53, which have been analogized in the A/D converter 62, are subjected to the inverse analog operation in the computer to be memorized. In this time, the signal from the HPMT 52 is preferentially adopted as the datum for the operation of concentration, and, in the case where the signal from the HPMT 52 exceeds the regulation current, the signal from the LPMT 53 is adopted and then the output from the LPMT 53 is multiplied by a factor determined by a ratio of the output from the HPMT 52 to said output from the LPMT 53 based on previously determined luminescent intensities.

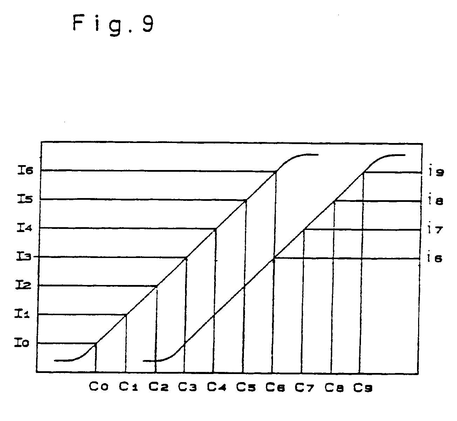

That is to say, referring to Fig. 9 showing a relation among the output from the HPMT 52, the output from the LPMT 53 and a concentration of luminescent substance, C₀ to C₉ on an axis of abscissa designate known concentrations of said luminescent substance, I₀ to I₆ on an axis of ordinate on the left side designate the output from the HPMT 52, and i₆ to i₉ on an axis of ordinate on the right side designate the output from the LPMT 53. Accordingly, said ratio of the output from the HPMT 52 to the output from the LPMT 53 based on the luminescent intensities can be determined by the use of this relation.

Now, provided that the output from the HPMT 52 is Iᵣ and the output from the LPMT 53 is iᵣ, the ratio can be determined as Iᵣ/iᵣ (= A).

Thus, the ratio of the output from the HPMT 52 to the output from the LPMT 53 is determined. If the output from the HPMT 52 exceeds the regulation current during the measurement, it is detected by means of the LPMT 53 and an output i from the LPMT 53 converted into the output from the HPMT 52 (I) can be expressed by I = i x A.

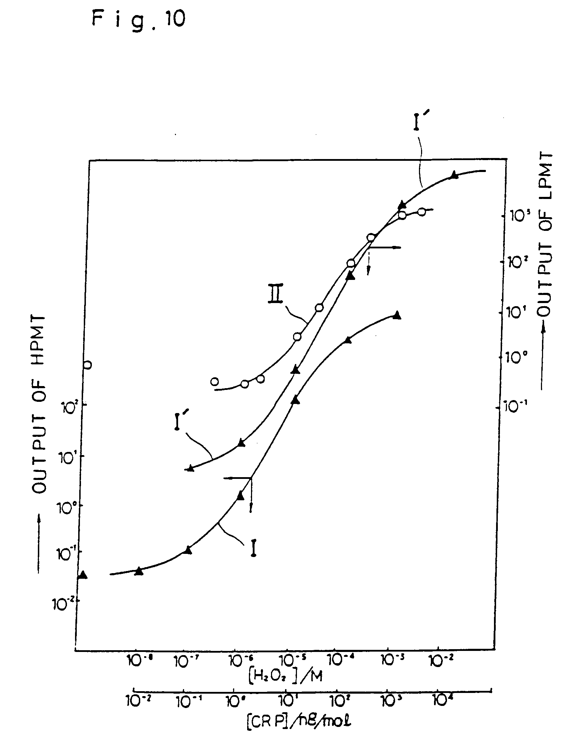

Fig. 10 shows results measured by the above described photometric portion 40. Referring to Fig. 10, an axis of abscissa designates a concentration of H₂O₂ and a concentration of CRP (C reactive proteins), an axis of ordinate on the left side designates the output from the HPMT 52, and an axis of ordinate on the right side designates the output from the LPMT 53. A curve I shows a change of said concentration of H₂O₂ by the HPMT 52 and a curve I′ shows a change of the concentration of H₂O₂ by the LPMT 53. It is found that when a detecting range of the HPMT 52 converted into the concentration of H₂O₂ is 10⁻⁸ to 10⁻⁴ M and a detecting range of LPMT 53 converted into the concentration of H₂O₂ is 10⁻⁶ to 10⁻² M, as shown by said curves I, I′, a detecting range of the apparatus on the whole is 10⁻⁸ to 10⁻² M. In addition, a curve II is a calibration curve of CRP (C reactive proteins) obtained by the enzyme immuno assay and expresses the output from the HPMT 52 and the output from the LPMT 53 in the form of one piece of continuous calibration curve following the above described method.

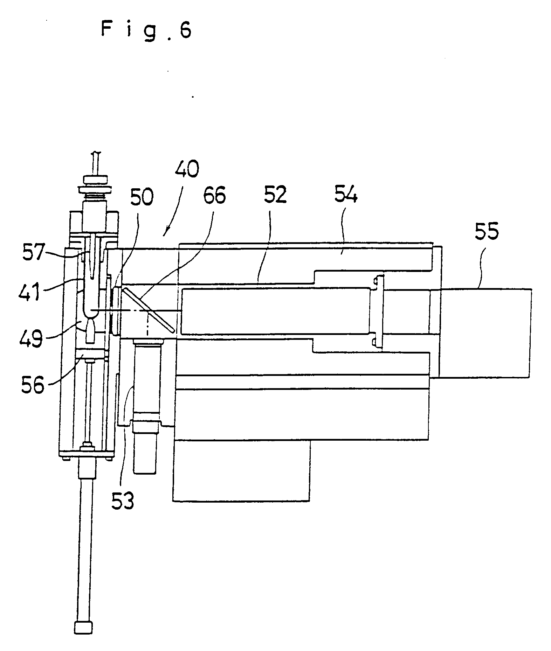

Although the HPMT 52 and the LPMT 53 are arranged on one straight line with disposing the photometric cell 41 therebetween in the above described preferred embodiment, the HPMT 52 and the LPMT 53 may be positioned by the use of an optical splitter 66 (for example half mirror, silica plate, glass plate and the like) so that the HPMT 52 may be arranged at 90° relatively to the LPMT 53, as shown in Fig. 6. In such a case, since a luminescent axis is common to both the HPMT 52 and the LPMT 53, an advantage occurs in that it is unnecessary to take into consideration an optical positional condition.

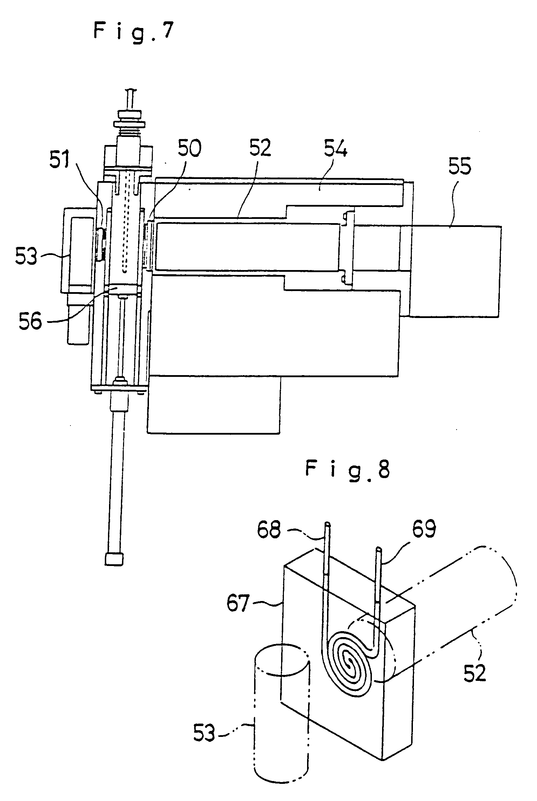

In addition, the present invention can be applied to not only the above described so-called batch-type measuring method but also the so-called flow through-type measuring method using a spiral flow through-type photometric cell 67, as shown in Figs. 7, 8. Furthermore, referring to Fig. 8, reference numerals 68, 69 designate an introducing portion and a discharging portion of a reactant solution and the like, respectively.

Besides, a silicon photodiode and the like can be used as the optical detector in addition to the above described photomultiplier. And, it goes without saying that the present invention can be applied to not only the photometric portion of the above described enzyme immuno assay system but also to photometric portions of other analyzers and the like.

As described above, a plurality of optical detectors different in sensitivity are provided in the vicinity of the photometric cell, so that said measuring range of sensitivity of the whole apparatus is the total sum of ranges of sensitivities of the respective optical detectors. Thus, a wider range of measurement in comparison with the case where merely a single optical detector is used can be obtained. The ratio of outputs from the optical detectors based on the intensity of luminescence is previously determined followed by multiplying the output of the low sensitivity optical detector by said factor determined by the ratio so that the conversion value corresponding to said output from high sensitivity optical detector may be obtained when the output from the high sensitivity optical detector has been saturated, so that a highly accurate measurement can be achieved widely ranging from a low sensitivity zone to a high sensitivity zone.

## Claims

1. A chemical luminescence-detecting apparatus for detecting an intensity of chemical luminescence generated in a photometric cell (41), having optical detector means
**characterized by**
- a plurality of optical detectors (52, 53) different in sensitivity including at least one high sensitivity optical detector (52) and one low sensitivity optical detector (53), said optical detectors (52, 53) are arranged in the vicinity of said photometric cell (41);
- a memory for storing previously determined ratios (A) of high sensitivity detector outputs (Iᵣ) to low sensitivity detector outputs (iᵣ) obtained from different of said optical detectors (52, 53) based on said intensity of luminescence;
- multiplying means for multiplying the outputs (iᵣ) of said low sensitivity detector (53) with the respective ratio (A) stored in the memory so that a conversion value corresponding to outputs from high sensitivity detectors (52) may be obtained when said outputs from said high sensitivity detectors (52) have been saturated;
- a changeover switch (61) for alternately putting the output signal from the high sensitivity optical detectors (52) and the output signal from the low sensitivity optical detectors (53) in the A/D converter (62);
- control means for switching over the changeover switch (61) from the high sensitivity detector (52) to the low sensitivity detector (53) every 50 ms to put the data in two; and
- means for detecting the saturation of the high sensitivity detector (52).

2. The chemical luminescence-detecting apparatus as claimed in claim 1,
**characterized in that**
the high sensitivity optical detector (52) and the low sensitivity optical detector (53) are arranged on both sides in the right and left direction of the photometric cell (41).

3. The chemical luminescence-detecting apparatus as claimed in claim 1,
**characterized in that**
an optical splitter (66) is provided in the vicinity of the photometric cell (41) and the high sensitivity optical detector (52) and the low sensitivity optical detector (53) are arranged on a transmission side and a reflection side of said optical splitter (66).

## Patentansprüche

1. Chemolumineszenz-Meßgerät zum Messen der Intensität von in einer Photometriezelle (41) erzeugter Chemolumineszenz, mit einer optischen Detektoreinrichtung;
**gekennzeichnet durch**
- mehrere optische Detektoren (52, 53) mit verschiedenen Empfindlichkeiten, mit mindestens einem optischen Detektor (52) hoher Empfindlichkeit und einem optischen Detektor (53) niedriger Empfindlichkeit, wobei diese optischen Detektoren (52, 53) in der Nähe der Photometriezelle (41) angeordnet sind;
- einen Speicher zum Vorabeinspeichern bestimmter Verhältnisse (A) von Ausgangssignalen (Iᵣ) der Detektoren mit hoher Empfindlichkeit zu Ausgangssignalen (iᵣ) der Detektoren mit niedriger Empfindlichkeit, wie von verschiedenen der optischen Detektoren (52, 53) auf Grundlage der Lumineszenzintensität erhalten;
- eine Multipliziereinrichtung zum Multiplizieren der Ausgangssignale (iᵣ) eines Detektors (53) mit niedriger Empfindlichkeit mit dem im Speicher abgespeicherten jeweiligen Verhältnis (A), so daß dann, wenn die Ausgangssignale der Detektoren (52) mit hoher Empfindlichkeit in Sättigung gegangen sind, ein Umsetzwert erhalten werden kann, der den Ausgangssignalen der Detektoren (52) mit hoher Empfindlichkeit entspricht;
- einen Umschalter (61) zum abwechselnden Eingeben des Ausgangssignals der optischen Detektoren (52) mit hoher Empfindlichkeit und des Ausgangssignals der optischen Detektoren (53) mit niedriger Empfindlichkeit in einen A/D-Umsetzer (62);
- eine Steuereinrichtung zum Umschalten des Umschalters (61) vom Detektor (52) mit hoher Empfindlichkeit alle 50 ms auf den Detektor (53) mit niedriger Empfindlichkeit, um die Daten zweizuteilen; und
- eine Einrichtung zum Erfassen des Sättigungszustandes des Detektors (52) mit hoher Empfindlichkeit.

2. Chemolumineszenz-Meßgerät nach Anspruch 1, **dadurch gekennzeichnet, daß** der optische Detektor (52) mit hoher Empfindlichkeit und der optische Detektor (53) mit niedriger Empfindlichkeit an den beiden Seiten rechts und links von der Photometriezelle (41) angeordnet sind.

3. Chemolumineszenz-Meßgerät nach Anspruch 1, **dadurch gekennzeichnet, daß** ein optischer Teiler (66) in der Nähe der Photometriezelle (41) vorhanden ist und der optische Detektor (52) mit hoher Empfindlichkeit sowie der optische Detektor (53) mit niedriger Empfindlichkeit auf der Transmissionsseite bzw. der Reflexionsseite des optischen Teilers (66) angeordnet sind.

## Revendications

1. Un dispositif de détection de la luminescence chimique pour détecter l'intensité de la luminescence chimique générée dans une cellule photométrique (41) comprenant des moyens de capteur optique, caractérisé par:
- une pluralité de capteurs optiques (52, 53), présentant des sensibilités différentes, et comprenant au moins un capteur optique à sensibilité élevée (52) et un capteur optique à sensibilité faible (53), lesdits capteurs optiques (52, 53) étant disposés à proximité de ladite cellule photométrique (41);
- une mémoire pour mettre en mémoire des rapports déterminés précédemment (A) des signaux de sortie (Iᵣ) du capteur à sensiblité élevée (53) par rapport aux signaux de sortie (Iᵣ) du capteur à sensibilité faible obtenus par lesdits capteurs optiques à sensibilité différente (52,53) en fonction de ladite intensité de luminescence;
- des moyens de multiplication pour mutiplier les signaux de sortie (Iᵣ) dudit capteur à faible sensibilité (53) par le rapport correspondant (A) mis en mémoire dans la mémoire, de telle façon qu'une valeur de conversion correspondant aux signaux de sortie à provenance des capteurs à haute sensiblité (52) puisse être obtenue lorsque lesdits signaux de sortie en provenance desdits capteurs à sensiblité élevée (52) ont été saturés;
- un commutateur de changement de position (61) pour faire entrer alternativement le signal de sortie en provenance des capteurs optiques à sensibilité élevée (52) et le signal de sortie en provenance des capteurs optiques à sensiblité faible (53) dans le convertisseur analogique/numérique (62) ;
- des moyens de commande pour faire commuter le commutateur de changement de position (61) du capteur à sensibilité élevée (52) au capteur à sensibilité faible (53), toutes les 50 ms pour faire entrer les deux données; et
- des moyens pour détecter la saturation du capteur à sensibilité élevée (52).

2. Le dispositif de détection de luminescence chimique selon la revendication 1, caractérisé en ce que le capteur optique à sensibilité élevée (52) et le capteur optique à sensibilité faible (53) sont disposés de chaque côté à droite et à gauche de la cellule photométrique (41).

3. Le dispositif de détection de luminescence chimique selon la revendication 1, caractérisé en ce qu'un diviseur optique (66) est prévu à proximité de la cellule photométrique (41) et en ce que le capteur optique à sensibilité élevée (52) et le capteur optique à sensiblité faible (53) sont disposés respectivement du côté transmission et du côté réflexion dudit diviseur optique (66).
